(19) Europäisches Patentamt
European Patent Office
Office européen des brevets

(11) EP 0 982 714 A1

(12) EUROPEAN PATENT APPLICATION

(43) Date of publication:
**01.03.2000 Bulletin 2000/09**

(51) Int. Cl.$^7$: **G11B 5/71**, G11B 5/738

(21) Application number: **99116701.6**

(22) Date of filing: **25.08.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **27.08.1998 JP 25751498**

(71) Applicant: **TDK Corporation**
**Chuo-ku, Tokyo 103-8272 (JP)**

(72) Inventors:
- **Sasaki, Hideki**
  **Tokyo 103-8272 (JP)**
- **Nagashima, Naoyuki**
  **Tokyo 103-8272 (JP)**
- **Uchida, Masatoshi**
  **Tokyo 103-8272 (JP)**

(74) Representative: **HOFFMANN - EITLE**
**Patent- und Rechtsanwälte**
**Arabellastrasse 4**
**81925 München (DE)**

# (54) Magnetic Disk

(57) A magnetic disk (1) of the present invention has a magnetic layer (31) via a non-magnetic underlayer (21) on a flexible non-magnetic support (10), wherein the magnetic layer and the non-magnetic underlayer do not include any fatty acid as a lubricant; the non-magnetic underlayer includes carbon black as a non-magnetic powder and a fatty ester A represented by a specific structural formula in which an alcohol component is an iso-compound and a fatty ester B represented by a specific structural formula comprising a lower alcohol with 5 or less carbon atoms as the lubricants; the contents of the fatty ester A and the fatty ester B, and a BET method and the content of carbon black are set in predetermined ranges, respectively, whereby the clogging of a head can be prevented, sticking does not occur, and durability can be remarkably improved.

EP 0 982 714 A1

## Description

### BACKGROUND OF THE INVENTION

#### (1) Field of the Invention

The present invention relates to a magnetic disk such as a floppy disk having a magnetic layer on a flexible non-magnetic support, and more specifically, it relates to a magnetic disk which can exert extremely excellent effects of head adhesion, durability and the like.

#### (2) Description of the Prior Art

In general, coating type magnetic disks each has, on a non-magnetic support, a magnetic layer in which components such as a ferromagnetic powder and an inorganic additive are dispersed in a binder. One of such magnetic disks is a floppy disk in which a magnetic layer is formed on a disk-like flexible non-magnetic support.

The floppy disk is required to be excellent in wear resistance and durability, because the disk closely comes in contact with a magnetic head and a liner during recording and playback. Furthermore, use environments of the magnetic disks become now diversified, and particularly, the magnetic disks are demanded which have the satisfactory durability even in the environments where temperature and humidity largely change.

As one means for meeting such a requirement and improving the durability, it has heretofore been attempted to add a lubricant into the magnetic layer.

Known examples of the lubricant to be added include monovalent higher fatty esters such as oleyl orate (e.g., Japanese Patent Publication Nos. Kokoku HEI 4-49171 and Kokoku HEI 5-12766), oleyl stearate (e.g., Japanese Patent Publication No. Kokoku HEI 4-70690) and isocetyl stearate (Japanese Patent Application Laid-Open No. SHO 59-186130), higher fatty esters of polyhydric alcohols such as glyceryl distearate and glyceryl triorate (e.g., Japanese Patent Publication No. Kokoku SHO 58-31655), liquid paraffins, and waxes.

By the way, in recent years, in order to increase data quantity which are recorded on a digital medium such as the magnetic disk, it is demanded to heighten a recording density. For the purpose of heightening the recording density, a thickness loss and a self-demagnetization loss of the medium is required to be considered, and in view of such a viewpoint, it is desired to reduce the thickness of the magnetic layer.

However, if the thickness of the magnetic layer is reduced, the influence of the surface properties of a support appears on the surface of the magnetic layer, so that electromagnetic conversion properties tend to deteriorate. Furthermore, by reducing the thickness of the magnetic layer, the amount of the lubricant is short, and the durability is poor.

Accordingly, it has heretofore been suggested that an underlayer obtained by dispersing a pigment such as carbon in a binder and then adding the lubricant is formed on the surface of the support, and a magnetic layer is then disposed on this underlayer (Japanese Patent Publication Nos. Kokoku HEI 7-078868 and Kokok HEI 8-016976). In this case, as the lubricant to be used, there is mainly used a combination of a higher fatty ester and a higher fatty acid, or one kind of higher fatty ester alone.

However, as the increase of the recording density further proceeds, a head gap of a drive becomes small, and a rotation speed of the drive becomes also higher, so that the conventional method of using the lubricant is not satisfactory at present. For example, in the case that the higher fatty acid is used as the lubricant, the clogging of the head is liable to occur owing to the higher fatty acid itself or a fatty acid salt produced by a reaction between the higher fatty acid and a metallic ion present as an impurity in a magnetic powder or an inorganic pigment in a coating film. Moreover, in a high-speed rotation drive, the contact between the medium and the head is severe, and it is also difficult to judge the kind and the amount of lubricant to be added. For example, if the amount of the lubricant is less than a necessary amount, the durability is poor, and conversely if it is too much, the lubricant bleeds out, an inconvenience such as sticking takes place. Furthermore, if a viscosity of the lubricant is not optimized, lubricating properties extremely deteriorate. In addition, the optimum amount of the lubricant depends on the characteristics of the pigment in the underlayer, so that it largely changes sometimes only by changing the kind of pigment.

Under such actual circumstances, the present invention has been contrived, and its object is to provide a magnetic disk which can improve the clogging of the head and which is free from the sticking between the disks and which is remarkably excellent in durability. More specifically, the object of the present invention is to provide a lubricant composition suitable for the high-speed rotation drive and is to provide a magnetic disk in which the amount of the lubricant is controlled to an optimum amount so as to improve the clogging of the head, to prevent the sticking, and to remarkably improve the durability.

SUMMARY OF THE INVENTION

The present inventors regarding the present application have intensively researched with the intention of solving such problems, and as a result, it has been found that when two kinds of lubricants are used in a specific blend ratio and blend amounts, the clogging of a head can be improved, and sticking can be prevented, and durability can be remarkably improved. In consequence, the present invention has been attained.

That is to say, the present invention is directed to a magnetic disk having a magnetic layer via a non-magnetic underlayer on a flexible non-magnetic support, wherein the magnetic layer and the non-magnetic underlayer do not include any fatty acid as a lubricant; the non-magnetic underlayer includes carbon black as a non-magnetic powder and a fatty ester A represented by the following structural formula (1) in which an alcohol component is an iso-compound and a fatty ester B represented by the following structural formula (2) comprising a lower alcohol with 5 or less carbon atoms as the lubricants; a weight ratio of the fatty ester A to the fatty ester B is in the range of 6/4 to 9/1; and the amounts (unit is g) of the fatty ester A and the fatty ester B to be added per unit area of the non-magnetic underlayer are such that a relation between a BET value of carbon black (which means a specific surface area value measured by a BET method and whose unit is $m^2/g$) and a weight of carbon black (unit is g) per unit volume of the non-magnetic underlayer meets the following structural formula (3):

the fatty ester A:

$$(CH_3)_2\text{-}CH\text{-}(CH_2)_{13}\text{-}O\text{-}CO\text{-}(CH_2)_n\text{-}CH_3 \quad (1)$$

wherein n is an integer of 12 to 18,
the fatty ester B:

$$C_{n'}H_{2n'+1}\text{-}O\text{-}CO\text{-}(CH_2)_n\text{-}CH_3 \quad (2)$$

wherein n' is an integer of 5 or less; and n is an integer of 12 to 18, and

$$\frac{\text{(the BET value of carbon black} \times \text{the weight of carbon black)}}{\text{(the weight of the fatty ester A + the weight of the fatty ester B)}} = 230 \text{ to } 570 \quad (3)$$

Furthermore, in a more preferable embodiment of the present invention, the fatty ester B is constituted as shown by the structural formula (2'):

the fatty ester B:

$$CH_3(CH_2)_3\text{-}O\text{-}CO\text{-}(CH_2)_n\text{-}CH_3 \quad (2')$$

wherein n is an integer of 12 to 18.

Moreover, in a more preferable embodiment of the present invention, the non-magnetic underlayer is constituted so as to include carbon black and particulate $\alpha$-iron oxide as non-magnetic powders.

In a more preferable embodiment of the present invention, the magnetic layer is constituted so that its thickness may be 1.0 $\mu$m or less, and the non-magnetic underlayer is constituted so that its thickness may be in the range of 0.5 to 3.0 $\mu$m.

In a more preferable embodiment of the present invention, the magnetic powder contained in the magnetic layer is a metallic magnetic powder.

In a more preferable embodiment of the present invention, the magnetic layer is constituted so as to be formed by simultaneously or successively applying the magnetic layer onto the previously applied non-magnetic underlayer, while the non-magnetic underlayer is still in a wet state.

In a more preferable embodiment of the present invention, the magnetic layer is constituted so as to be formed by applying the magnetic layer onto the previously applied non-magnetic underlayer, after the non-magnetic underlayer is dried and cured.

In a more preferable embodiment of the present invention, the magnetic disk of the present invention is constituted so as to be used in a high-speed drive of 700 r.p.m. or more.

In a more preferable embodiment of the present invention, constitution is made so that the magnetic layers are formed via the non-magnetic underlayers on both the surfaces of the flexible non-magnetic support, respectively.

BRIEF DESCRIPTION OF THE DRAWINGS

Fig. 1 is a sectional view of a suitable constitutional embodiment of a magnetic disk according to the present invention, and

Fig. 2 is a graph showing environmental cycle conditions in the case that a durability test is carried out.

DETAILED DESCRIPTION OF THE INVENTION

Next, a practical mode of the present invention will be described in detail. Fig. 1 shows a sectional view of a suitable constitutional embodiment of a magnetic disk 1 according to the present invention.

As shown in Fig. 1, the magnetic disk 1 of the present invention is equipped with magnetic layers 31, 35 which are formed on both the plane surfaces of a flexible non-magnetic substrate 10 via non-magnetic underlayers 21, 25, respectively. The disk shown in Fig. 1 is of a type which is called the so-called double-sided storage medium, but the present invention is not limited to this type, and it also covers the so-called one-sided storage medium in which the non-magnetic underlayer 21 and the magnetic layer 31 are formed on one surface alone of the non-magnetic substrate 10.

Each of the non-magnetic underlayer 21 and the non-magnetic underlayer 25 in the present invention contains a certain composition of the present invention which will be described hereinafter, and both the layers usually have the same composition.

The non-magnetic underlayers 21, 25 for use in the present invention contain, as lubricants, a fatty ester A represented by the following structural formula (1) in which an alcohol component is an iso-compound and a fatty ester B represented by the following structural formula (2) comprising a lower alcohol with 5 or less carbon atoms.

The fatty ester A:

$$(CH_3)_2\text{-}CH\text{-}(CH_2)_{13}\text{-}O\text{-}CO\text{-}(CH_2)_n\text{-}CH_3 \qquad (1)$$

wherein n is an integer of 12 to 18,

The fatty ester B:

$$C_{n'}H_{2n'+1}\text{-}O\text{-}CO\text{-}(CH_2)n\text{-}CH_3 \qquad (2)$$

In the fatty ester A represented by the above structural formula (1), a value of n is an integer in the range of 12 to 18, preferably 12 to 16. If the value of n is 11 or less, a viscosity of the lubricant is too low, so that an adequate oil film strength cannot be obtained. Moreover, if the value of n is 19 or more, the viscosity of the lubricant is too high. Therefore, when the magnetic disk is used in a high-speed drive of 700 r.p.m. or more, especially 1000 r.p.m. or more, a lubricant performance of the magnetic disk extremely deteriorates. Moreover, as the alcohol component for use in synthesis of the fatty ester A, the isomer is used as described above. As the fatty ester A, not only one kind of ester but also a mixture of two or more kinds of esters can be used within a range which satisfies the above structural formula (1).

In the fatty ester B represented by the above structural formula (2), a value of n is an integer in the range of 12 to 18, preferably 12 to 16. If the value of n is 11 or less, the viscosity of the lubricant is too low, so that the adequate oil film strength cannot be obtained. Moreover, a volatility of the lubricant is raised, and lubricating properties cannot be maintained for a long period of time. Furthermore, if the value of n is 19 or more, a melting point rises, the lubricating properties in a low-temperature region come short, and a magnetic head is easily clogged at a certain temperature. Additionally, a value of n' of the alcohol component for use in the synthesis of the fatty ester B is 5 or less, preferably in the range of 2 to 4. If the value of n' is 6 or more, the melting point rises, and the lubricating properties in low temperatures disadvantageously deteriorate. A most preferred mode of the fatty ester B is represented by a following structural formula (2').

The fatty ester B:

$$CH_3(CH_2)_3\text{-}O\text{-}CO\text{-}(CH_2)_n\text{-}CH_3 \qquad (2')$$

wherein n is an integer of 12 to 18.

As the fatty ester B, not only one kind of ester but also a mixture of two or more kinds of esters can be used within a range which satisfies the above structural formula (2).

A content weight ratio of the fatty ester A to the fatty ester B is preferably in the range of 6/4 to 9/1, more preferably 7/3 to 8/2. Moreover, the amounts of the fatty ester A and the fatty ester B to be added to the non-magnetic underlayer 21 depend on the kind and the amount of carbon black contained as an essential component in the non-magnetic underlayers 2, 25 in the present invention, but they are added so as to satisfy the following formula (3).

$$\text{(the BET value of carbon black} \times \text{the weight of carbon black)/}\\ \text{(the weight of the fatty ester A + the weight of the fatty ester B) = 230 to 570} \quad (3)$$

Additionally, in the formula (3), the BET value of carbon black is a value of a specific surface area of carbon black measured by a BET method and has a unit of ($m^2$/g). Moreover, each weight of carbon black, the fatty ester A and the fatty ester B is a weight per unit volume of the nonmagnetic underlayer, and has a unit of (g).
In the above formula (3), a numerical value which is a blend design index of these components is preferably in the range of 230 to 570, more preferably 280 to 530.
If this value exceeds 570, in a relationship of the fatty ester and the carbon black for use in the present invention, the fatty ester (the lubricant) is inconveniently adsorbed by carbon black, so that a sufficient lubricating effect cannot be expected. Conversely, if the value is less than 230, the fatty ester (the lubricant) inconveniently bleeds out on the surface of the layer, so that when cookie-shaped media obtained by punching plate-like media are stacked during storage, these media adhere inconveniently to one another.
Additionally, for the application of the above formula (3), when two or more kinds of carbon blacks are used, the BET value of carbon black is calculated as follows. That is to say, a value obtained by multiplying the BET value of one carbon black by a ratio in the carbon black may simply be added to the BET value of the other carbon black. For example, when two kinds of carbon blacks CB1 (BET value: T1) and CB2 (BET value: T2) are mixed at a ratio of 50%:50%, the BET value to be applied to the formula (3) is obtained as (T1)(0.5)+(T2)(0.5).
It is necessary that at least carbon black should be contained as a pigment in the non-magnetic underlayers 21, 25. The pigment may be carbon black alone, but another non-magnetic powder is preferably used together. With regard to the amount of carbon black to be added, when the total weight of the pigment to be used is set to 100, carbon black is preferably blended in such an amount that a value of (the oil absorption of carbon black) × (the weight of carbon black) may be 1000 or more and a value of (the BET value of carbon black) × (the weight of carbon black) may be 2000 or more.
Moreover, in the ratio of the fatty ester A and fatty ester B, if the fatty ester A is excessively decreased to provide the ratio of less than 6/4, the low melting lubricant is excessively decreased, thereby deteriorating a durability in low temperatures. Moreover, if the fatty ester A is excessively increased to exceed the ratio of 9/1, the fatty ester B comes short, thereby deteriorating the durability in a low humidity.
In the present invention, it is essential for the non-magnetic underlayers 21, 25 to contain carbon black as described above. Furthermore, another non-magnetic powder may be used together, and is not limited as such, but examples thereof include α-iron oxide, α-alumina, $Cr_2O_3$, $SiO_2$, ZnO, $TiO_2$, $ZrO_2$, $SnO_2$ and the like. Among these, when powdered α-iron oxide with an average particle diameter in the range of 20 to 80 nm is used together, thixotropic properties of a paint only of carbon black can be moderated. Moreover, fine particles of the powder contribute to enhancement of surface properties of the non-magnetic underlayers 21, 25. Furthermore, the combined use of α-alumina or $Cr_2O_3$ with the average particle diameter in the range of 0.1 to 1.0 μm as an abrasive material leads to enhanced strengths of the non-magnetic underlayers 21, 25. Carbon black for use is not especially limited, but carbon black with the average particle diameter in the range of about 10 nm to 80 nm is preferable. As such carbon black, a furnace carbon black, thermal carbon black, acetylene black or another known material can be used. Moreover, a single system or a mixed system may be used.
The value of the BET specific surface area of such carbon black is in the range of 50 to 500 $m^2$/g, preferably 60 to 250 $m^2$/g. Moreover, so-called DBP oil absorption of carbon black is in the range of 20 to 200 ml/100g, preferably 40 to 150 ml/100g. In a method of measuring the BET specific surface area, carbon black powder is heated/treated and simultaneously evacuated at around 250°C for 30 to 60 minutes, and substances adsorbed by the powder are removed. Subsequently, the powder is introduced to a measuring apparatus, and adsorption measurement is performed by nitrogen at a liquid nitrogen temperature of -195°C.
For carbon black which can be used in the present invention, for example, "Carbon Black Handbook", edited by Carbon Black Society can be referred to.
Moreover, in the present invention, any one of the non-magnetic underlayers 21, 25 and magnetic layers 31, 35 does not contain a fatty acid as the lubricant. If the non-magnetic underlayer or the magnetic layer contains the fatty acid, the magnetic head is easily clogged.
As a binder for use in the non-magnetic underlayers 21, 25 and magnetic layers 31, 35 of the present invention, a thermoplastic resin, thermosetting or reacting resin, electron ray sensitive type modified resin, or the like is used, and a combination of the binders is appropriately selected/used in accordance with medium characteristics and process conditions.
Examples of the thermoplastic resin include (metha)acrylic resin, polyester resin, polyurethane resin, vinyl chloride copolymer, acrylonitrile-butadiene copolymer, polyamide resin, polyvinyl butyral, nitrocellulose, styrene-butadiene copolymer, polyvinyl alcohol resin, acetal resin, epoxy resin, phenoxy resin, polyether resin, polycaprolactone or another polyfunctional polyethers, polyamide resin, polyimide resin, phenol resin, polybutadiene elastomer, rubber chloride, acrylic rubber, isoprene rubber, epoxy modified rubber and the like.

Examples of the thermosetting resin include a condensated phenol resin, epoxy resin, polyurethane setting type resin, urea resin, butyral resin, polymeric resin, melanin resin, alkyd resin, silicone resin, acrylic reactive resin, polyamide resin, epoxy-polyamide resin, saturated polyester resin, urea-formaldehyde resin, and the like.

Among the aforementioned resins, the resin having a hydroxyl group on a terminal end and/or a side chain is preferable as the reactive resin, because a crosslinking using polyisocyanate, an electron beam (EB) crosslinking modification or the like can easily be used. Further as a polar group on the terminal end or the side chain there may be contained -COOH, $-SO_3X$, $-OSO_3X$, $-OPO_3X$, $-PO_3X$, $-PO_2X$, $-N^+R_3Cl^-$, $-NR_2$, $\equiv N^+-R-Y^-$ (X is H or an alkali metal, Y is an electronegative functional group, and R is a hydrocarbon radical) or another acid polar group, basic polar group, betaine, or the like. The containing of these components is preferable in enhancing dispersion properties. These may be used alone, or as a combination of one or more types.

Among these, a combination of vinyl chloride copolymer and polyurethane resin is preferably used as described below. Examples of the resin for use in the present invention include a vinyl chloride copolymer. Specifically, the content of the vinyl chloride is in the range of 60 to 95 wt%, preferably 60 to 90 wt%, and an average polymerization degree is preferably in the range of about 100 to 500. The polyurethane resin for combined use with such vinyl chloride resin is particularly effective in that wear resistance and adhesion properties to a support are excellent. Furthermore, in addition to these resins, various known resins may be contained.

It is further possible to introduce (metha)acrylic double-bond into the resin by a known technique and perform an electron beam sensitive modification. Moreover, the content of the electron beam functional group is in the range of 1 to 40 mol%, preferably 10 to 30 mol% in hydroxyl group components from the viewpoint of stability during manufacture, electron beam setting properties and the like. Especially, in the vinyl chloride copolymer, when the monomer is reacted in such a manner that 1 to 20, preferably 2 to 10 functional groups per molecule are obtained, an electron beam setting resin superior both in dispersion and setting properties can be obtained.

The magnetic layers 31, 35 applied on the non-magnetic underlayers 21, 25, respectively, contain magnetic powder and binder. The aforementioned binder may be used, and examples of the magnetic powder include $\gamma$-$Fe_2O_3$, Co-containing $\gamma$-$Fe_2O_3$, $Fe_3O_4$, Co-containing $Fe_3O_4$, $CrO_2$, hexagonal ferrite or another fine oxide powder, Fe, Co, Ni or another metal or fine alloy powder of the metals, iron carbide and the like. The magnetic powder may be selected in accordance with the type of medium to which the power is to be applied, but barium ferrite, metal or alloy, iron carbide or the like is preferable. Especially most preferable is metallic magnetic powder. Moreover, only one type of the magnetic powder may be used or two or more types thereof may be used together.

The content of the magnetic powder in the magnetic layer may be in the range of 50 to 85 wt%, preferably 55 to 75 wt% relative to the entire magnetic layer. Moreover, the magnetic layer may contain fine inorganic particles, the lubricant except the fatty acid or various other additives if necessary.

In a constitution of a formed film of the present invention, the non-magnetic underlayer 21 (25) is laminated on a non-magnetic support 10, and the magnetic layer 31 (35) is laminated on the underlayer. The thickness of the non-magnetic underlayer 21, 25 is preferably in the range of 0.5 to 3.0 μm, especially preferably 1.0 to 3.0 μm. If the thickness is less than 0.5 μm and excessively small, the underlayer is easily influenced by surface properties of the non-magnetic support 10, and surface properties of the magnetic disk are deteriorated, thereby adversely influencing electromagnetic conversion properties. Furthermore, since the non-magnetic underlayer is thin, the amount of the lubricant comes short, thereby deteriorating the durability. Moreover, if the thickness exceeds 3.0 μm and is excessively large, application properties during application are deteriorated, which is undesirable in respect of production.

On the other hand, the thickness of the magnetic layer 31, 35 is arbitrary in accordance with a magnetic recording system. When high-density recording is considered, however, the thickness is preferably 1.0 μm or less, especially preferably in the range of 0.01 to 0.5 μm.

For a method of laminating/applying the non-magnetic underlayer 21 and magnetic layer 31 or the non-magnetic underlayer 25 and magnetic layer 35, a so-called wet-on-wet application in which the magnetic layer is overlapped/applied with the non-magnetic underlayer being still in a wet state, or a so-called wet-on-dry application in which the non-magnetic underlayer is applied, then dried, and the magnetic layer is applied thereon may be used. However, considering from production efficiency, in the wet-on-dry application, the non-magnetic underlayer is preferably formed as the binder using a radiation cure resin, and cured by radiation before the magnetic layer is applied.

Moreover, in the wet-on-wet application method, the magnetic may be applied after the non-magnetic underlayer is applied, or both layers may simultaneously be applied. As an application method, gravure coat, reverse roll coat, dye nozzle coat and other various known application means can be used. Above all, in the wet-on-wet application, the dye nozzle coat is preferably used.

As the non-magnetic support 10, known films of polyethylene terephthalate (PET), polyethylene naphthalate (PEN) and other polyesters, polyolefins, polyamide, polyimide, polyamide-imide, polysulfone cellulose triacetate, polycarbonate and the like can be used. Preferably, PET, PEN, or aromatic polyamide is used. If these films are used, the electromagnetic conversion properties, durability, friction properties, film strength, and productivity balance can easily be obtained. The thickness of the non-magnetic support 10 is approximately in the range of 30 to 100 μm.

Next, the present invention will be described in more detail in accordance with concrete examples.

Example 1

A non-magnetic coating composition 1 for the formation of a non-magnetic underlayer was prepared in the following manner.

Preparation of Non-magnetic Coating Composition 1

| | |
|---|---|
| • Particulate $\alpha$-$Fe_2O_3$ (made by Sakai Chemical Industry Co., Ltd.: FRO-3) | 55 pts. wt. |
| (average particle diameter = 30 nm, BET = 45 $m^2/g$) | |
| • Carbon black (made by Mitsubishi Chemical Co., Ltd.: #45B) | 30 pts. wt. |
| (average particle diameter = 24 nm, BET = 137 $m^2/g$, DBP oil absorption 47 ml/100 g) | |
| • $\alpha$-$Al_2O_3$ (made by Sumitomo Chemical Co., Ltd.: AKP30) | 15 pts. wt. |
| (average particle diameter = 0.33 μm, BET = 8 $m^2/g$) | |
| • Vinyl chloride-vinyl acetate copolymer (made by Nisshin Chemical Industry Co., Ltd.: Solbain MK6) | 12 pts. wt. |
| (polymerization degree: 350, polar group: carboxylic acid = 0.5% and ammonium salt N content = 300 ppm) | |
| • Phosphobetaine-containing polyurethane resin | 4 pts. wt. |
| (Mw = 40000, polar group concentration = 1.5 groups/molecule) | |
| • -$SO_3Na$-containing polyurethane resin | 2 pts. wt. |
| (Mn = 25000, polar group concentration = 1 group/molecule) | |
| • Isocetyl stearate (which corresponds to fatty ester A) | 10 pts. wt. |
| • Butyl stearate (which corresponds to fatty ester B) | 4 pts. wt. |
| • MEK (methyl ethyl ketone) | 150 pts. wt. |
| • Toluene | 50 pts. wt. |
| • Cyclohexanone | 50 pts. wt. |

The above-mentioned components were kneaded, and then dispersed by a sand grinder mill to prepare the non-magnetic coating composition 1 for the formation of the non-magnetic underlayer.

Next, a magnetic coating composition 1 for the formation of a magnetic layer was prepared in the following manner.

Preparation of Magnetic Coating Composition 1

| | |
|---|---|
| • Metallic magnetic powder | 100 pts. wt. |
| (Hc = 1660 Oe, $\sigma_s$ = 126 emu/g, BET = 58 $m^2/g$, average axial length = 0.33 μm) | |

(continued)

| | |
|---|---|
| • Vinyl chloride copolymer (made by Nippon Zeon Co., Ltd.: MR110) | 14 pts. wt. |
| (polymerization degree = 300, polar group: $-OSO_3K$ = 1.5 groups/molecule) | |
| • Phosphobetaine-containing polyurethane resin | 4 pts. wt. |
| (Mw = 40000, polar group concentration = 1.5 groups/molecule) | |
| • $-SO_3Na$-containing polyurethane resin | 2 pts. wt. |
| (Mn = 25000, polar group concentration = 1 group/molecule) | |
| • $\alpha$-$Al_2O_3$ (made by Sumitomo Chemical Co., Ltd.: AKP30) | 10 pts. wt. |
| (average particle diameter = 0.33 µm, BET = 8 $m^2$/g) | |
| • $Cr_2O_3$ (made by Nippon Chemical Industrial Co., Ltd.: S-1) | 5 pts. wt. |
| (average particle diameter = 0.40 µm, BET = 3 $m^2$/g) | |
| • Carbon black (made by Colombian Co., Ltd.: Sevacurve MT) | 3 pts. wt. |
| (average particle diameter = 350 nm, BET = 7 $m^2$/g, DBP oil absorption = 41 ml/100 g) | |
| • Dispersant | 3 pts. wt. |
| • MEK (methyl ethyl ketone) | 250 pts. wt. |
| • Toluene | 80 pts. wt. |
| • Cyclohexanone | 80 pts. wt. |

The above-mentioned components were kneaded, and then dispersed by a sand grinder mill to prepare the magnetic coating composition 1 for the formation of the magnetic layer.

Preparation of Magnetic Disk Sample

4 parts by weight of Coronate L (made by Nippon Polyurethane Industry Co., Ltd.) were added to the above-mentioned non-magnetic coating composition 1, and similarly 4 parts by weight of Coronate L were added to the above-mentioned magnetic coating composition. First, the non-magnetic coating composition 1 for the formation of the non-magnetic underlayer was applied onto one surface of a PET film having a surface roughness (Ra) of 9 nm and a thickness of 62 µm by an extrusion die nozzle system so that its thickness (dry film thickness) might be 1.5 µm, and in succession, the magnetic coating composition 1 for the formation of the magnetic layer was applied onto the non-magnetic coating composition 1 by the extrusion die nozzle system so that a thickness (dry film thickness) might be 0.3 µm, while the above-mentioned non-magnetic coating composition 1 was still in a wet state.

Afterward, magnetic powder in the magnetic layer was deorientated by a deorientating magnet, and the layer was dried at a dry temperature of 100°C. Afterward, a calender treatment was carried out at a temperature of 60°C under a linear pressure of 300 kg/cm to complete the lamination of the layers on one surface of the PET film. Next, in accordance with the same procedure, the non-magnetic under layer and the magnetic layer were also laminated on the other surface of the PET film, thereby preparing a raw sheet roll on both the surfaces of which the magnetic layers were formed.

This raw sheet roll was punched into a disk, and it was then thermally cured at 70°C for 24 hours to prepare a magnetic disk sample of Example 1.

Example 2

The same procedure as in Example 1 was conducted except that as the lubricants contained in the non-magnetic underlayers in Example 1, there were used 8.5 parts by weight of isocetyl stearate and 5.5 parts by weight of butyl stearate, thereby preparing a magnetic disk sample of Example 2.

Example 3

The same procedure as in Example 1 was conducted except that as the lubricants contained in the non-magnetic underlayers in Example 1, there were used 12.5 parts by weight of isocetyl stearate and 1.5 parts by weight of butyl stearate, thereby preparing a magnetic disk sample of Example 3.

Example 4

The same procedure as in Example 1 was conducted except that as the lubricants contained in the non-magnetic underlayers in Example 1, there were used 5.7 parts by weight of isocetyl stearate and 2.3 parts by weight of butyl stearate, thereby preparing a magnetic disk sample of Example 4.

Example 5

The same procedure as in Example 1 was conducted except that as the lubricants contained in the non-magnetic underlayers in Example 1, there were used 12 parts by weight of isocetyl stearate and 5 parts by weight of butyl stearate, thereby preparing a magnetic disk sample of Example 5.

Example 6

The same procedure as in Example 1 was conducted except that as the lubricants contained in the non-magnetic underlayers in Example 1, there were used 3.5 parts by weight of isocetyl stearate and 1.5 parts by weight of butyl stearate, and as carbon black contained in the non-magnetic underlayers, R760 made by Colombian Co., Ltd. (BET value: 70 $m^2/g$) was used, thereby preparing a magnetic disk sample of Example 6.

Example 7

The same procedure as in Example 6 was conducted except that as the lubricants contained in the non-magnetic underlayers in Example 6, there were used 6.3 parts by weight of isocetyl stearate and 2.7 parts by weight of butyl stearate, thereby preparing a magnetic disk sample of Example 7.

Example 8

The same procedure as in Example 1 was conducted except that as the lubricants contained in the non-magnetic underlayers in Example 1, there were used 5.6 parts by weight of isocetyl stearate and 2.4 parts by weight of butyl stearate, and as carbon black contained in the non-magnetic underlayers, SC made by Colombian Co., Ltd. (BET value: 220 $m^2/g$) was used, thereby preparing a magnetic disk sample of Example 8.

Example 9

The same procedure as in Example 8 was conducted except that as the lubricants contained in the non-magnetic underlayers in Example 8, there were used 13 parts by weight of isocetyl stearate and 5 parts by weight of butyl stearate, thereby preparing a magnetic disk sample of Example 9.

Example 10

A non-magnetic coating composition 2 for the formation of a non-magnetic underlayer was prepared in the following manner.

Preparation of Non-magnetic Coating Composition 2

| | |
|---|---|
| • Particulate $\alpha$-$Fe_2O_3$ (made by Sakai Chemical Industry Co., Ltd.: FRO-3)<br>(average particle diameter = 30 nm, BET = 45 $m^2/g$) | 55 pts. wt. |
| • Carbon black (made by Mitsubishi Chemical Co., Ltd.: #45B)<br>(average particle diameter = 24 nm, BET = 137 $m^2/g$, DBP oil absorption = 47 ml/100 g) | 30 pts. wt. |

(continued)

| | |
|---|---|
| • $\alpha$-$Al_2O_3$ (made by Sumitomo Chemical Co., Ltd.: AKP30) | 15 pts. wt. |
| (average particle diameter = 0.33 µm, BET = 8 $m^2$/g) | |
| • EB curable vinyl chloride copolymer (made by Toyobo Co., Ltd.: TBO246 30% solution) | 12 pts. wt. |
| (polymerization degree: 300, polar group:-$OSO_3K$ = 1.5 groups/molecule) | |
| • EB curable polyurethane resin (made by Toyobo Co., Ltd.: TBO246 35% solution) | 4 pts. wt. |
| (Mn = 25000, polar group: sodium phosphite = 1 group/molecule) | |
| • Polyfunctional acrylic monomer (made by Sanyo Chemical Industries, Ltd.: TA505) | 2 pts. wt. |
| • Isocetyl stearate (which corresponds to fatty ester A) | 10 pts. wt. |
| • Butyl stearate (which corresponds to fatty ester B) | 4 pts. wt. |
| • MEK (methyl ethyl ketone) | 126 pts. wt. |
| • Toluene | 38 pts. wt. |
| • Cyclohexanone | 38 pts. wt. |

The above-mentioned components were kneaded, and then dispersed by a sand grinder mill to prepare the non-magnetic coating composition 2 for the formation of the non-magnetic underlayer. Then, this non-magnetic coating composition 2 was applied onto one surface of a PET film having a surface roughness (Ra) of 9 nm and a thickness of 62 µm by an extrusion die nozzle system so that its thickness (dry film thickness) might be 1.5 µm, and it was then dried at a dry temperature of 100°C. Afterward, a 5 Mrad EB (electron beam) irradiation treatment was conducted. Next, in accordance with the same procedure, the non-magnetic under layer was also laminated on the other surface of the PET film, thereby preparing a roll in which the non-magnetic underlayers were formed on both the surfaces of the PET film.

Next, 4 parts by weight of Coronate L (made by Nippon Polyurethane Industry Co., Ltd.) were added to the coating composition for the formation of the above-mentioned magnetic layer, and the mixture was then applied onto the roll having the non-magnetic underlayer by an extrusion die nozzle system so that its thickness (dry film thickness) might be 0.3 µm. Afterward, magnetic powder in the magnetic layer was deorientated by a deorientating magnet, and the layer was dried at a dry temperature of 100°C. Then, a calender treatment was carried out at a temperature of 60°C under a linear pressure of 300 kg/cm to form the magnetic layer on one surface of the PET film. Next, in accordance with the same procedure, the magnetic layer was formed on the non-magnetic underlayer on the other surface of the PET film, thereby preparing a raw sheet roll in which the magnetic layers were formed on both the surfaces of the PET film.

This raw sheet roll was punched into a disk, and it was then thermally cured at 70°C for 24 hours to prepare a magnetic disk sample of Example 10.

<u>Example 11</u>

The same procedure as in Example 10 was conducted except that as the lubricants contained in the non-magnetic underlayers in Example 10, there were used 8.5 parts by weight of isocetyl stearate and 5.5 parts by weight of butyl stearate, thereby preparing a magnetic disk sample of Example 11.

<u>Example 12</u>

The same procedure as in Example 10 was conducted except that as the lubricants contained in the non-magnetic underlayers in Example 10, there were used 12.5 parts by weight of isocetyl stearate and 1.5 parts by weight of butyl stearate, thereby preparing a magnetic disk sample of Example 12.

<u>Comparative Example 1</u>

The same procedure as in Example 1 was conducted except that 2 parts by weight of stearic acid were further added as the lubricant contained in the non-magnetic underlayers in Example 1, thereby preparing a magnetic disk sample of Comparative Example 1.

Comparative Example 2

The same procedure as in Example 1 was conducted except that as the lubricants contained in the non-magnetic underlayers in Example 1, there were used 3.5 parts by weight of isocetyl stearate and 1.5 parts by weight of butyl stearate, thereby preparing a magnetic disk sample of Comparative Example 2.

Comparative Example 3

The same procedure as in Example 1 was conducted except that as the lubricants contained in the non-magnetic underlayers in Example 1, there were used 14 parts by weight of isocetyl stearate and 6 parts by weight of butyl stearate, thereby preparing a magnetic disk sample of Comparative Example 3.

Comparative Example 4

The same procedure as in Example 1 was conducted except that as the lubricants contained in the non-magnetic underlayers in Example 1, there were used 7 parts by weight of isocetyl stearate and 7 parts by weight of butyl stearate, thereby preparing a magnetic disk sample of Comparative Example 4.

Comparative Example 5

The same procedure as in Example 1 was conducted except that as the lubricants contained in the non-magnetic underlayers in Example 1, there were used 13.4 parts by weight of isocetyl stearate and 0.6 part by weight of butyl stearate, thereby preparing a magnetic disk sample of Comparative Example 5.

Comparative Example 6

The same procedure as in Example 10 was conducted except that as the lubricants contained in the non-magnetic underlayers in Example 10, 7 parts by weight of isocetyl stearate and 7 parts by weight of butyl stearate were used, thereby preparing a magnetic disk sample of Comparative Example 6.

Comparative Example 7

The same procedure as in Example 10 was conducted except that as the lubricants contained in the non-magnetic underlayers in Example 10, 13.4 parts by weight of isocetyl stearate and 0.6 part by weight of butyl stearate were used, thereby preparing a magnetic disk sample of Comparative Example 7.

Example 13

The same procedure as in Example 1 was conducted except that isocetyl stearate and butyl stearate contained in the non-magnetic underlayers in Example 1 were replaced with isocetyl myristate and butyl myristate, respectively, thereby preparing a magnetic disk sample of Example 13.

Example 14

The same procedure as in Example 1 was conducted except that isocetyl stearate and butyl stearate contained in the non-magnetic underlayers in Example 1 were replaced with isocetyl arachate and butyl arachate, respectively, thereby preparing a magnetic disk sample of Example 14.

Comparative Example 8

The same procedure as in Example 1 was conducted except that isocetyl stearate contained in the non-magnetic underlayers in Example 1 was replaced with isocetyl laurate, thereby preparing a magnetic disk sample of Comparative Example 8.

Comparative Example 9

The same procedure as in Example 1 was conducted except that isocetyl stearate contained in the non-magnetic underlayers in Example 1 was replaced with isocetyl behenate, thereby preparing a magnetic disk sample of Comparative Example 9.

Comparative Example 10

The same procedure as in Example 1 was conducted except that butyl stearate contained in the non-magnetic underlayers in Example 1 was replaced with butyl laurate, thereby preparing a magnetic disk sample of Comparative Example 10.

Comparative Example 11

The same procedure as in Example 1 was conducted except that butyl stearate contained in the non-magnetic underlayers in Example 1 was replaced with butyl behenate, thereby preparing a magnetic disk sample of Comparative Example 11.

Comparative Example 12

The same procedure as in Example 1 was conducted except that isocetyl stearate and butyl stearate contained in the non-magnetic underlayers in Example 1 were replaced with isocetyl laurate and butyl laurate, respectively, thereby preparing a magnetic disk sample of Comparative Example 12.

Comparative Example 13

The same procedure as in Example 1 was conducted except that isocetyl stearate and butyl stearate contained in the non-magnetic underlayers in Example 1 were replaced with isocetyl behenate and butyl behenate, respectively, thereby preparing a magnetic disk sample of Comparative Example 13.

Comparative Example 14

The same procedure as in Example 1 was conducted except that butyl stearate was not contained in the non-magnetic underlayers in Example 1 and the content of isocetyl stearate was increased as much as that of butyl stearate contained in Example 1 so that the total amount of the lubricants might be the same as in Example 1, thereby preparing a magnetic disk sample of Comparative Example 14.

Comparative Example 15

The same procedure as in Example 1 was conducted except that isocetyl stearate was not contained in the non-magnetic underlayers in Example 1 and the content of butyl stearate was increased as much as that of isocetyl stearate contained in Example 1 so that the total amount of the lubricants might be the same as in Example 1, thereby preparing a magnetic disk sample of Comparative Example 15.

Example 15

The same procedure as in Example 1 was conducted except that the magnetic coating composition 1 of Example 1 was replaced with a magnetic coating composition 2 described below, thereby preparing a magnetic disk sample of Example 15.

Preparation of Magnetic Coating Composition 2

| | |
|---|---|
| • Metallic magnetic powder | 100 pts. wt. |
| (Hc = 1660 Oe, $\sigma_s$ = 126 emu/g, BET = 58 $m^2$/g, average axial length = 0.33 μm) | |
| • Vinyl chloride copolymer (made by Nippon Zeon Co., Ltd.: MR110) | 14 pts. wt. |
| (polymerization degree = 300, polar group: $-OSO_3K$ = 1.5 groups/molecule) | |

(continued)

| | |
|---|---|
| • Phosphobetaine-containing polyurethane resin | 4 pts. wt. |
| (Mw = 40000, polar group concentration = 1.5 groups/molecule) | |
| • $-SO_3Na$-containing polyurethane resin | 2 pts. wt. |
| (Mn = 25000, polar group concentration = 1 group/molecule) | |
| • $\alpha$-$Al_2O_3$ (made by Sumitomo Chemical Co., Ltd.: AKP30) | 10 pts. wt. |
| (average particle diameter = 0.33 $\mu$m, BET = 8 $m^2$/g) | |
| • $Cr_2O_3$ (made by Nippon Chemical Industrial Co., Ltd.: S-1) | 5 pts. wt. |
| (average particle diameter = 0.40 $\mu$m, BET = 3 $m^2$/g) | |
| • Carbon black (made by Colombian Co., Ltd.: Sevacurve MT) | 3 pts. wt. |
| (average particle diameter = 350 nm, BET = 7 $m^2$/g, DBP oil absorption = 41 ml/100 g) | |
| • Dispersant | 3 pts. wt. |
| • Isocetyl stearate | 3 pts. wt. |
| • Butyl stearate | 2 pts. wt. |
| • MEK (methyl ethyl ketone) | 250 pts. wt. |
| • Toluene | 80 pts. wt. |
| • Cyclohexanone | 80 pts. wt. |

The above-mentioned components were kneaded, and then dispersed by a sand grinder mill to prepare the magnetic coating composition 2 for the formation of the magnetic layer.

For the above-mentioned respective magnetic disk samples, the tests of (1) durability, (2) head adhesion and (3) sticking were made in accordance with the following evaluation procedures.

〈Evaluation Procedures 〉

(1) Durability

A disk was inserted into a ZIP 100 MB drive (made by Iomega Co., Ltd.) having a rotational frequency of 3000 rpm, and a head was subjected to random seek in cycle circumstances shown by a graph of Fig. 2, and the disk was taken out every a predetermined time to visually confirm the presence of a scratch on the disk. When the scratch was confirmed, the test was completed, and a time (Hr) which was taken until this point was regarded as an evaluation value. The sample having a durability of more than 1000 hours is practically desirable.

(2) Head Adhesion

Each sample was allowed to run for 400 hours by the use of the same facilities and circumstances as in the case of the above-mentioned durability test, and a head was observed through an optical microscope at a magnification of 100 times. Evaluation standards are as follows:

○ ... A case where a deposit was confirmed on the head.
X ... A case where any deposit was not confirmed on the head.

(3) Sticking

200 of the punched disks (which are usually called "cookies") were piled up and then allowed to stand at an ordinary temperature of 25°C for 4 weeks, and a sticking state between the disks was then confirmed.

Evaluation standards are as follows:

◎... A case where the cookies could be all separated one by one when an adhesive tape was stuck on the uppermost cookie of the piled cookies and then lifted.

◯ ... A case where the cookies were separated in the piled state of two cookies once to thrice.

X ... A case where the cookies were separated in the piled state of two cookies 4 times or more, or in the piled state of three cookies once.

The results are shown in Table 1 given hereinafter.

Table 1

| Sample No. | BET value of carbon black ($m^2/g$) | Fatty ester A (pts. wt.) | Fatty ester B (pts. wt.) | Stearic acid (C) (pts. wt.) | Ratio of lubricants (A/B/C) | Parameter value of formula (3) | Durability | Head adhesion | Sticking |
|---|---|---|---|---|---|---|---|---|---|
| Example 1 | 137 | 10.0 | 4.0 | 0 | 7/3/0 | 294 | 2000 | ○ | ◎ |
| Example 2 | 137 | 8.5 | 5.5 | 0 | 6/4/0 | 294 | 1500 | ○ | ◎ |
| Example 3 | 137 | 12.5 | 1.5 | 0 | 9/1/0 | 294 | 1600 | ○ | ◎ |
| Example 4 | 137 | 5.7 | 2.3 | 0 | 7/3/0 | 514 | 1400 | ○ | ◎ |
| Example 5 | 137 | 12.0 | 5.0 | 0 | 7/3/0 | 242 | 2000 | ○ | ○ |
| Example 6 | 70 | 3.5 | 1.5 | 0 | 7/3/0 | 420 | 1800 | ○ | ◎ |
| Example 7 | 70 | 6.3 | 2.7 | 0 | 7/3/0 | 233 | 2000 | ○ | ○ |
| Example 8 | 220 | 5.6 | 2.4 | 0 | 7/3/0 | 550 | 1700 | ○ | ◎ |
| Example 9 | 220 | 13.0 | 5.0 | 0 | 7/3/0 | 244 | 1900 | ○ | ○ |
| Comparative Example 1 | 137 | 10.0 | 4.0 | 2 | 10/4/2 | 294 | 1000 | × | ○ |
| Comparative Example 2 | 137 | 3.5 | 1.5 | 0 | 7/3/0 | 822 | 500 | ○ | ◎ |
| Comparative Example 3 | 137 | 14.0 | 6.0 | 0 | 7/3/0 | 206 | 1800 | ○ | × |
| Comparative Example 4 | 137 | 7.0 | 7.0 | 0 | 5/5/0 | 294 | 800 | ○ | ◎ |
| Comparative Example 5 | 137 | 13.4 | 0.6 | 0 | 10/0.5/0 | 294 | 1000 | ○ | ○ |
| Example 10 | 137 | 10.0 | 4.0 | 0 | 7/3/0 | 294 | 1900 | ○ | ◎ |
| Example 11 | 137 | 8.5 | 5.5 | 0 | 6/4/0 | 294 | 1400 | ○ | ◎ |
| Example 12 | 137 | 12.5 | 1.5 | 0 | 9/1/0 | 294 | 1700 | ○ | ◎ |
| Comparative Example 6 | 137 | 7.0 | 7.0 | 0 | 5/5/0 | 294 | 700 | ○ | ◎ |
| Comparative Example 7 | 137 | 13.4 | 0.6 | 0 | 10/0.5/0 | 294 | 1000 | ○ | ○ |

Table 1 (continued)

| Sample No. | BET value of carbon black ($m^2/g$) | Fatty ester A (pts. wt.) | Fatty ester B (pts. wt.) | Stearic acid (C) (pts. wt.) | Ratio of lubricants (A/B/C) | Parameter value of formula (3) | Durability | Head adhesion | Sticking |
|---|---|---|---|---|---|---|---|---|---|
| Example 13 | 137 | Isocetyl myristate (10.0) | Butyl myristate (4.0) | 0 | 7/3/0 | 294 | 1500 | ○ | ◎ |
| Example 14 | 137 | Isocetyl arachate (10.0) | Butyl arachate (4.0) | 0 | 7/3/0 | 294 | 1300 | ○ | ◎ |
| Comparative Example 8 | 137 | Isocetyl laurate (10.0) | Butyl stearate (4.0) | 0 | 7/3/0 | 294 | 600 | ○ | ◎ |
| Comparative Example 9 | 137 | Isocetyl behenate (10.0) | Butyl stearate (4.0) | 0 | 7/3/0 | 294 | 500 | ○ | ◎ |
| Comparative Example 10 | 137 | Isocetyl stearate (10.0) | Butyl laurate (4.0) | 0 | 7/3/0 | 294 | 700 | ○ | ◎ |
| Comparative Example 11 | 137 | Isocetyl stearate (10.0) | Butyl behenate (4.0) | 0 | 7/3/0 | 294 | 700 | ○ | ◎ |
| Comparative Example 12 | 137 | Isocetyl laurate (10.0) | Butyl laurate (4.0) | 0 | 7/3/0 | 294 | 400 | ○ | ◎ |
| Comparative Example 13 | 137 | Isocetyl behenate (10.0) | Butyl behenate (4.0) | 0 | 7/3/0 | 294 | 300 | ○ | ◎ |
| Comparative Example 14 | 137 | Isocetyl stearate (14.0) | ---- | 0 | 10/0/0 | 294 | 1000 | ○ | ○ |
| Comparative Example 15 | 137 | ---- | Butyl stearate (14.0) | 0 | 0/10/0 | 294 | 200 | ○ | ○ |
| Example 15 | 137 | 10.0 | 4.0 | 0 | 7/3/0 | 294 | 2000 | ○ | ◎ |

The effect of the present invention is apparent from the results shown in Table 1. That is to say, a magnetic disk of the present invention has a magnetic layer via a non-magnetic underlayer on a flexible non-magnetic support; the magnetic layer and the non-magnetic underlayer do not include any fatty acid as a lubricant; the non-magnetic underlayer includes carbon black as a non-magnetic powder and a fatty ester A represented by the following structural formula (1) in which an alcohol component is an iso-compound and a fatty ester B represented by the following structural formula (2) comprising a lower alcohol with 5 or less carbon atoms as the lubricants; a weight ratio of the fatty ester A to the fatty ester B is in the range of 6/4 to 9/1; and the amounts (unit is g) of the fatty ester A and the fatty ester B to be added per unit area of the non-magnetic underlayer are such that a relation between a BET value of carbon black (which means a specific surface area value measured by a BET method and whose unit is $m^2/g$) and a weight of carbon black (unit is g) per unit volume of the non-magnetic underlayer meets the following structural formula (3):

the fatty ester A:

$$(CH_3)_2\text{-}CH\text{-}(CH_2)_{13}\text{-}O\text{-}CO\text{-}(CH_2)_n\text{-}CH_3 \quad (1)$$

wherein n is an integer of 12 to 18,
the fatty ester B:

$$C_{n'}H_{2n'+1}\text{-}O\text{-}CO\text{-}(CH_2)_n\text{-}CH_3 \quad (2)$$

wherein n' is an integer of 5 or less; and n is an integer of 12 to 18, and

$$\text{(the BET value of carbon black} \times \text{the weight of carbon black)/(the weight of the fatty ester A + the fatty ester B) = 230 to 570} \quad (3)$$

As described above, when two kinds of lubricants are used in a specific blend ratio and blend amounts, the clogging of a head can be improved, and sticking can be prevented, and durability can be remarkably improved.

## Claims

**1.** A magnetic disk (1) having a magnetic layer (31) via a non-magnetic underlayer (21) on a flexible non-magnetic support (10), characterised in that

the magnetic layer and the non-magnetic underlayer do not include any fatty acid as a lubricant;
the non-magnetic underlayer includes carbon black as a non-magnetic powder and a fatty ester A represented by the following structural formula (1) in which an alcohol component is an iso-compound and a fatty ester B represented by the following structural formula (2) comprising a lower alcohol with 5 or less carbon atoms as the lubricants;
a weight ratio of the fatty ester A to the fatty ester B is in the range of 6/4 to 9/1; and the amounts (unit is g) of the fatty ester A and the fatty ester B to be added per unit area of the non-magnetic underlayer are such that a relation between a BET value of carbon black (which means a specific surface area value measured by a BET method and whose unit is $m^2/g$) and a weight of carbon black (unit is g) per unit volume of the non-magnetic underlayer meets the following structural formula (3):

the fatty ester A:

$$(CH_3)_2\text{-}CH\text{-}(CH_2)_{13}\text{-}O\text{-}CO\text{-}(CH_2)_n\text{-}CH_3 \quad (1)$$

wherein n is an integer of 12 to 18,
the fatty ester B:

$$C_{n'}H_{2n'+1}\text{-}O\text{-}CO\text{-}(CH_2)_n\text{-}CH_3 \quad (2)$$

wherein n' is an integer of 5 or less; and n is an integer of 12 to 18, and

$$\text{(the BET value of carbon black} \times \text{the weight of carbon black)/(the weight of the fatty ester A + the weight of the fatty ester B) = 230 to 570} \quad (3)$$

**2.** The magnetic disk according to Claim 1 wherein the fatty ester B is represented by the structural formula (2'):

the fatty ester B:

$$CH_3(CH_2)_3\text{-O-CO-}(CH_2)_n\text{-}CH_3 \quad (2')$$

wherein n is an integer of 12 to 18.

**3.** The magnetic disk according to Claim 1 or Claim 2 wherein the non-magnetic underlayer includes carbon black and particulate $\alpha$-iron oxide as non-magnetic powders.

**4.** The magnetic disk according to any one of Claims 1 -3 wherein the thickness of the magnetic layer is 1.0 μm or less, and the thickness of the non-magnetic underlayer is in the range of 0.5 to 3.0 μm.

**5.** The magnetic disk according to any one of Claims 1 -4 wherein the magnetic powder contained in the magnetic layer is a metallic magnetic powder.

**6.** The magnetic disk according to any one of Claims 1 -5 wherein the magnetic layer is formed by simultaneously or successively applying the magnetic layer onto the previously applied non-magnetic underlayer, while the non-magnetic underlayer is still in a wet state.

**7.** The magnetic disk according to any one of Claims 1 -6 wherein the magnetic layer is formed by applying the magnetic layer onto the previously applied non-magnetic underlayer, after the non-magnetic underlayer is dried and cured.

**8.** The magnetic disk according to any one of Claims 1 -7 which is used in a high-speed drive of 700 r.p.m. or more.

**9.** The magnetic disk according to any one of Claims 1 -8 wherein the magnetic layers(31,35) are formed via the non-magnetic underlayers(21,25) on both the surfaces of the flexible non-magnetic support(10), respectively.

FIG. 1

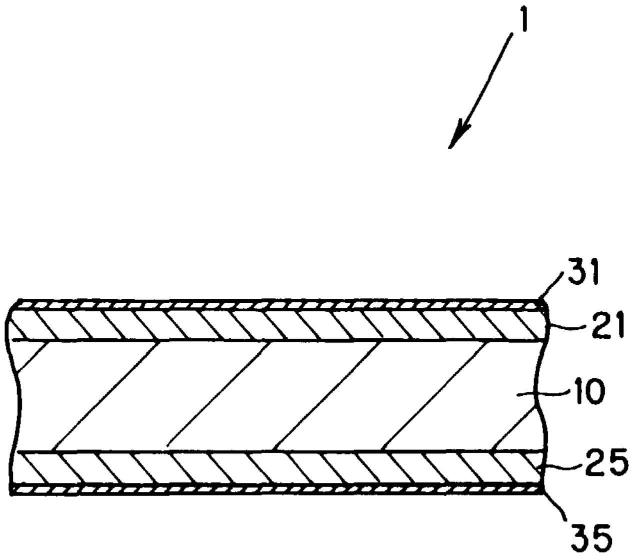

FIG. 2

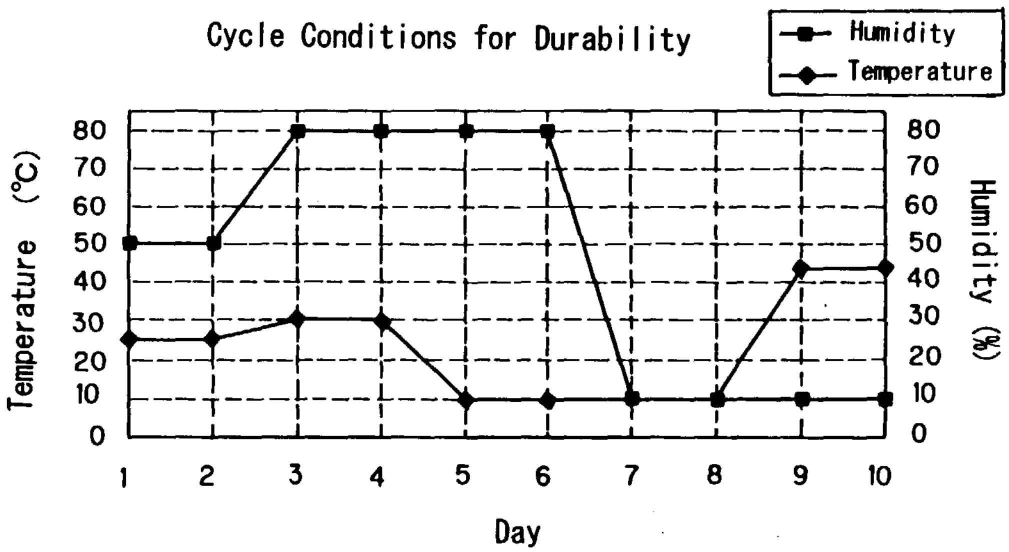
Cycle Conditions for Durability
Humidity
Temperature
Temperature (°C)
80
70
60
50
40
30
20
10
0
Humidity (%)
1
2
3
4
5
6
7
8
9
10
Day

European Patent Office

# EUROPEAN SEARCH REPORT

Application Number
EP 99 11 6701

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 5 698 286 A (IKARASHI TSUNEHIKO ET AL) 16 December 1997 (1997-12-16)<br>* example 8 *<br>--- | 1 | G11B5/71<br>G11B5/738 |
| P,A | EP 0 865 034 A (FUJI PHOTO FILM CO LTD) 16 September 1998 (1998-09-16)<br>* page 33, line 25; claim 30 *<br>* page 34, line 46 - line 53 * | 1 | |
| A | & WO 98 35345 A<br>----- | 1 | |

TECHNICAL FIELDS SEARCHED (Int.Cl.7)
G11B

The present search report has been drawn up for all claims

| Place of search | Date of completion of the search | Examiner |
|---|---|---|
| THE HAGUE | 11 January 2000 | Heywood, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 99 11 6701

This annex lists the patent family members relating to the patent documents cited in the above-mentioned European search report.
The members are as contained in the European Patent Office EDP file on
The European Patent Office is in no way liable for these particulars which are merely given for the purpose of information.

11-01-2000

| Patent document cited in search report | Publication date | Patent family member(s) | Publication date |
|---|---|---|---|
| US 5698286 A | 16-12-1997 | JP 6111280 A | 22-04-1994 |
| | | JP 6111281 A | 22-04-1994 |
| | | JP 6259752 A | 16-09-1994 |
| | | JP 6259751 A | 16-09-1994 |
| | | EP 0623918 A | 09-11-1994 |
| | | WO 9408336 A | 14-04-1994 |
| EP 0865034 A | 16-09-1998 | JP 10320759 A | 04-12-1998 |
| | | JP 10228624 A | 25-08-1998 |
| | | JP 10228631 A | 25-08-1998 |
| | | EP 0962919 A | 08-12-1999 |
| | | JP 10320744 A | 04-12-1998 |
| | | WO 9835345 A | 13-08-1998 |

EPO FORM P0459

For more details about this annex : see Official Journal of the European Patent Office, No. 12/82